Europäisches Patentamt

European Patent Office

Office européen des brevets

(19)

(11) Publication number: **0 459 791 A2**

# EUROPEAN PATENT APPLICATION

(12)

(21) Application number: 91304878.1

(22) Date of filing: 30.05.91

(51) Int. Cl.⁵: **G11B 23/087**

(30) Priority: 01.06.90 JP 144710/90
08.06.90 JP 150960/90
28.08.90 JP 227043/90

(43) Date of publication of application:
04.12.91 Bulletin 91/49

(84) Designated Contracting States:
DE FR GB NL

(71) Applicant: MATSUSHITA ELECTRIC
INDUSTRIAL CO., LTD.
1006, Kadoma
Kadoma-shi, Osaka-fu 571 (JP)

(72) Inventor: Honsho, Hironori
13, 8-1503, Matsuya-cho
Neyagawa-shi, Osaka-fu 572 (JP)
Inventor: Saito, Fuminari
1-chome, 4-17, Miyamadai
Kawanishi-shi, Hyogo-ken 666-01 (JP)

(74) Representative: Crawford, Andrew Birkby et al
A.A. THORNTON & CO. Northumberland
House 303-306 High Holborn
London WC1V 7LE (GB)

(54) Tape cassette.

(57)    A tape cassette comprises: a tape arranged in roll; a pair of reels fixedly holding leading and trailing ends of the tape; a cassette case containing the pair of reels with a forwardly exposed portion of the tape being extended in the front thereof; an opening provided inside a forwardly exposed portion of the tape; two, left and right, side walls arranged in the cassette case for defining the opening; two or more tape guides arranged adjacent to their respective left and right ends of the opening for guiding the forwardly exposed portion of the tape in line; a front lid pivotably supported by both sides of the cassette case for covering the front of the forwardly exposed portion of the tape when lifted down; an inner lid pivotably supported by the front lid for covering the back of the tape when lifted down; and guiding grooves arranged in the left and right side walls respectively for controlling a pivotal movement of the inner lid. At least one of the tape guides is spaced by a distance L from the opening-side end of its corresponding left or right side wall which has a thickness of T, where L<T is established.

EP 0 459 791 A2

FIG.2

## BACKGROUND OF THE INVENTION

### 1.Field of the Invention

The present invention relates to a tape cassette and more particularly, a tape cassette suitable for use with a magnetic recording/reproducing apparatus, e.g. a video tape recorder.

### 2.Description of the Prior Art

In common, a tape cassette for use with a magnetic tape device such as a video tape recorder has encased therein a magnetic tape of which forwardly exposed portion is arranged in the front of a casing along a path defined by a space between a front lid and an inner lid of the casing (for example, as disclosed in Japanese Patent Laid-open Publication 63-175279 (1988)).

The conventional tape cassette has one opening provided in the front thereof and extending throughout approximately the width thereof. The exposed portion of the magnetic tape which is protected between the front and inner lids can thus be guided through the opening with guiding members.

The front lid is arranged for pivotal movement on a pivot pin.

In addition, the front lid has a pair of brackets mounted in the upper inner side thereof. The inner lid has at both ends a couple of support pins thereof inserted into the two brackets respectively so that it can turn about the support pins.

The inner lid also has at both ends a couple of left and right guide pins thereof slidably fitted into guiding grooves provided in the casing. The left and right guiding grooves are arranged symmetrical with respect to the center line of the casing and also, the relation between the support pins and the guiding pins has symmetry.

Each of the guiding members is fabricated by forming a resin into a semicircular shape for providing a wider area of tape passing.

The conventional tape cassette is provided with a locking member pivotably mounted on the casing for prevention of inadvertent opening of the front lid. The locking member is urged from back by a plate spring to stay leaning frontward.

The front lid has a projection arranged on the side thereof for engagement with a hook of the locking member thus to be prevented from rotating.

The casing has a tape cassette positioning portion arranged in the front thereof, where the locking member is not mounted, for determining the position of the tape cassette during loading.

The operation of such a conventional tape cassette having the foregoing arrangement will be described.

When the tape cassette is loaded into a video tape recorder (referred to as a VTR hereinafter), the positioning portion arranged in the front of its casing comes into contact with a cassette stopper provided in the VTR and remains secured. Simultaneously, the locking member is allowed by a lock releasing member of the VTR to rotate against the urging force of the spring. As the result, the front lid is unlocked and becomes turning upward.

As the front lid is opened, the inner lid moves upward with its support pins turning about the pivot pins. Also, its guide pins travel along their respective guiding grooves until the inner lid is completely opened and a loading post assembly of the VTR moves into the opening of the tape cassette.

The above is a description of the loading into a VTR and the unloading will be carried out in a reverse action of the loading.

However, the following disadvantages are inherent in the conventional tape cassette.

(1) The semicircular resin guiding members are provided for widening the tape path area to ease the feeding of the tape from the casing. This provides low guiding accuracy. Also, such an arrangement is critically affected by unfavorable environmental changes and suffered from deterioration with time and thus, damage to the tape will hardly be avoided. If the semicircular guiding post members are made of metallic materials, their production will create another difficulty and the overall cost will be increased.

If the guiding post members are of simple cylindrical shaped metal, the tape path area becomes reduced and the arrangement in the VTR will be much restricted in the freedom of design.

(2) The single opening in the casing restricts the tape loading path or the tape loading mechanism. For example, the use of an M loading arrangement, e.g. in the VHS VTR system, which is compact in size and simple in mechanism, requires a wider opening of the tape cassette. If the opening in the casing is small with respect to the overall width of the tape cassette, the M loading arrangement will be applied with much difficulty.

On the other hand, if the opening is widened, the forwardly exposed portion of the tape will easily be deflected causing direct contact with the inner lid. Accordingly, it is prohibited to widen the opening arbitrarily for prevention of any possible damage to the tape.

Another conventional tape cassette is disclosed in Japanese Patent Laid-open Publication 60-214488 (1985) in which three openings in its casing are arranged for solving the above problems. When this tape cassette is used with a U loading arrangement, e.g. of the β or 8mm VTR system, a plurality of guiding posts have to move across its three openings for loading. This loading operation can be facilitated by mounting the plural posts on one ring member. At the same time, the shape of the openings should have symmetry and extend continuously and widely for ensuring the efficient movement of the ring. However, the openings of the conventional tape cassette are narrow in width, distanced from each other, and formed of no symmetrical shape. Also, they are not favorable in appearance.

(3) The locking member for prevention of inadvertent opening of the front lid and the positioning portion for determining the position of the tape cassette in loading are provided in different locations. This allows both the positional relation between the locking member and the positioning portion of the tape cassette and the positional relation between the positioning stopper and the lock releasing member of the VTR to develop an error in combination and thus, the locking and unlocking action will be conducted with less accuracy.

## SUMMARY OF THE INVENTION

It is an object of the present invention to provide an improved tape cassette arranged in:

(1) that the tape path area remains wide with the use of metal posts which provide high guiding accuracy and is less affected by unwanted environmental change or deterioration with time, thus ensuring minimum damage to the tape;

(2) that the front opening is adapted suitable for both the M and U loading systems and exhibiting good appearance; and

(3) that the locking and unlocking of a front lid for opening action is executed at high accuracy, thus ensuring tight protection of the tape from dust.

A tape cassette according to the present invention is provided with two, left and right side walls which define an opening provided in a cassette case and two or more tape guides arranged adjacent to left and right ends of the opening for guiding a forwardly exposed portion of a magnetic tape, in which a distance L between at least one of the tape guides and an opening-side end of its corresponding left or right side wall is smaller than a thickness T of the side wall and thus, L<T is established. Accordingly, the tape path area remains wide with the use of metal posts which provide high guiding accuracy and is less affected by unwanted environmental change or deterioration with time, thus ensuring minimum damage to the tape and also, tight protection of the tape from dust.

## BRIEF DESCRIPTION OF THE DRAWINGS

Fig.1 is a plan view showing one embodiment of the present invention in which both an upper cassette case and a front lid are removed;
Fig.2 is a plan view of the same with an inner lid removed;
Fig.3 is a bottom, a front, a rear, a right side, and a left side view of a tape cassette according to the present invention;
Figs.4-a and 4-b are cross sectional views of the tape cassette taken along the line W-W of Fig.1 showing the closing and opening states of the front lid respectively;
Figs.5-a and 5-b are cross sectional views of the tape cassette taken along the line X-X of Fig.1 showing the closing and opening states of the front lid respectively;
Figs.6-a and 6-b are cross sectional views of the tape cassette taken along the line Y-Y of Fig.1 showing the closing and opening states of the front lid respectively;
Fig.7 is a front view of the tape cassette with the front lid opened;
Fig.8 is an enlarged plan view of a lid locking section of the tape cassette shown in Fig.1;
Figs.9 and 10 are cross sectional views taken along the line Z-Z of Fig.8 showing unlocking and locking states respectively;
Fig.11 is a plan view showing the loading of the tape cassette onto an M loading arrangement; and
Fig.12 is a plan view showing the loading of the tape cassette onto a U loading arrangement.

## DESCRIPTION OF THE PREFERRED EMBODIMENT

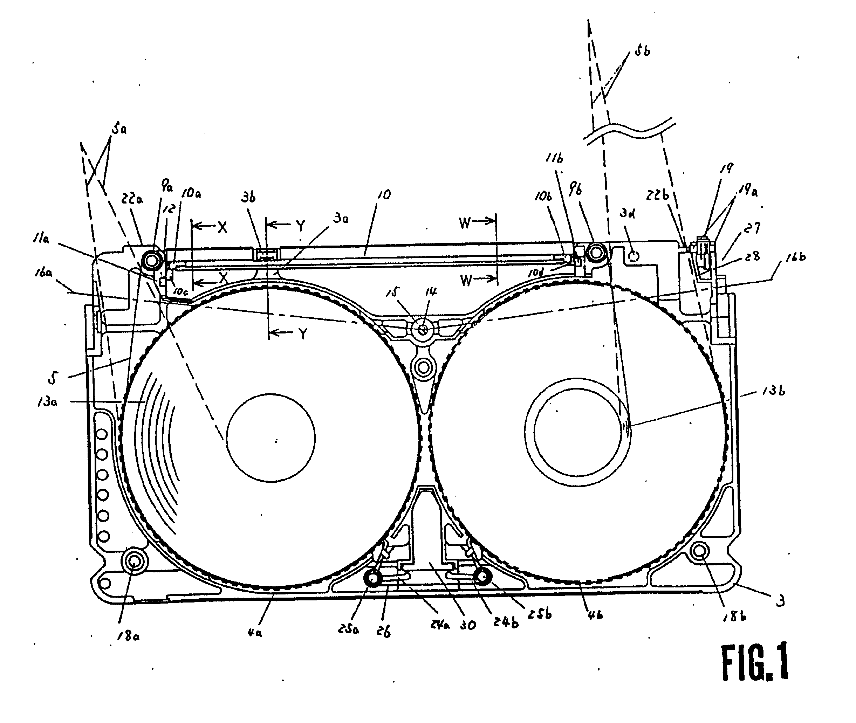

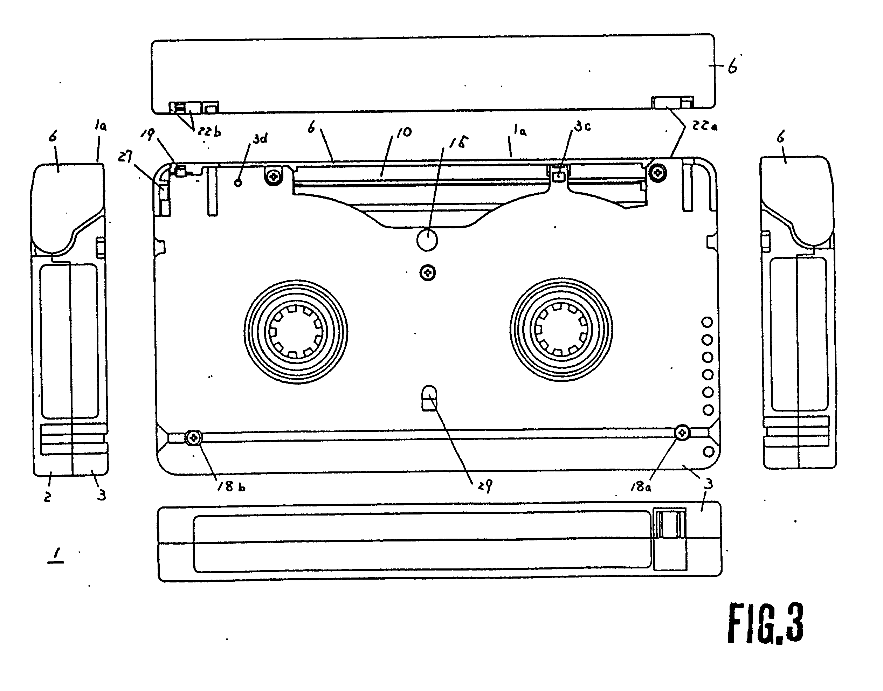

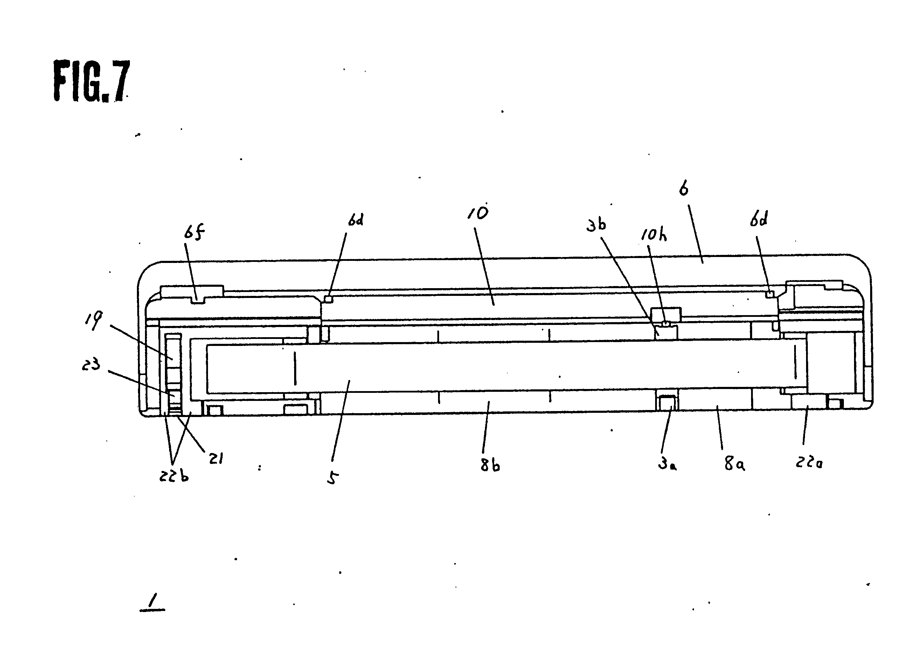

One preferred embodiment of the present invention will be described in the form of a tape cassette referring to Figs. 1 to 7.

As shown, a tape cassette 1 is externally shaped into a flat cassette form which has an upper case 2 and a lower case 3 fixedly coupled to each other and contains a couple of reels 4a and 4b arranged on the same plane and carrying a magnetic tape 5. The magnetic tape 5 is wound around the two reels 4a and 4b with its leading and trailing ends tied to them respectively.

Also, provided is a front lid 6 for covering the upper and front of the magnetic tape 5. The front lid 6 has a pair of front lid pivot shafts 6a and 6b arranged on the left and right side plates thereof and extending between the upper and lower cases 2 and 3 so that it can pivot about the coaxes of the pivot shafts 6a and 6b. The front lid 6 remains urged in the closing direction by a front lid spring 7 mounted on the pivot shaft 6b. The front lid spring 7 is a twisted coil spring supported at one end by the upper case 2 and at the other end by a spring hook 6c arranged on the front lid 6.

Represented by 8a and 8b are openings arranged, as separated from each other by a partitive portion 3a of the lower case 3, for accepting loading posts (not shown) which will move in for drawing the magnetic tape 5 out of the upper and lower cases 2 and 3. The partitive portion 3a is incorporated at front with a tape guard 3b arranged for preventing a forwardly exposed portion of the magnetic tape 5 from being tentioned backward and also, has position determining hole 3c provided therein for positioning the tape cassette 1. The position determining hole 3c is accompanied with another hole 3d, thus forming a first position determining hole means.

The partitive portion 3a is located on the line extending from back to front across the center of the reel 4a and the forwardly exposed portion of the magnetic tape 5 is spaced minimum from the walls of their respective upper and lower cases 2 and 3, so that the area of the openings 8a and 8b becomes maximum.

An opening 8b having an approximately symmetrical shape is arranged to extend approximately in the center of the tape cassette 1.

The forwardly exposed portion of the magnetic tape 5 is tensioned and guided with stainless guide posts 9a and 9b arranged approximately in the left and right ends of the upper 2 or lower case 3 respectively so that it can extend at the front of the upper and lower cases 2 and 3. The stainless guide posts 9a and 9b are made of non-magnetic material and precision finished having a surface roughness of less than $0.4\mu m$.

In addition, an inner lid 10 is provided across the two openings 8a and 8b for covering the back of the magnetic tape 5. The inner lid 10 has a pair of left- and rightward extending inner lid pivot shafts 10a and 10b arranged on both the side thereof. The two inner lid pivot shafts 10a and 10b are supported by the bearings 6e of two brackets 6d arranged integrally with the front lid 6 so that the inner lid 10 can perform pivotal movement on the pivot shafts 10a and 10b.

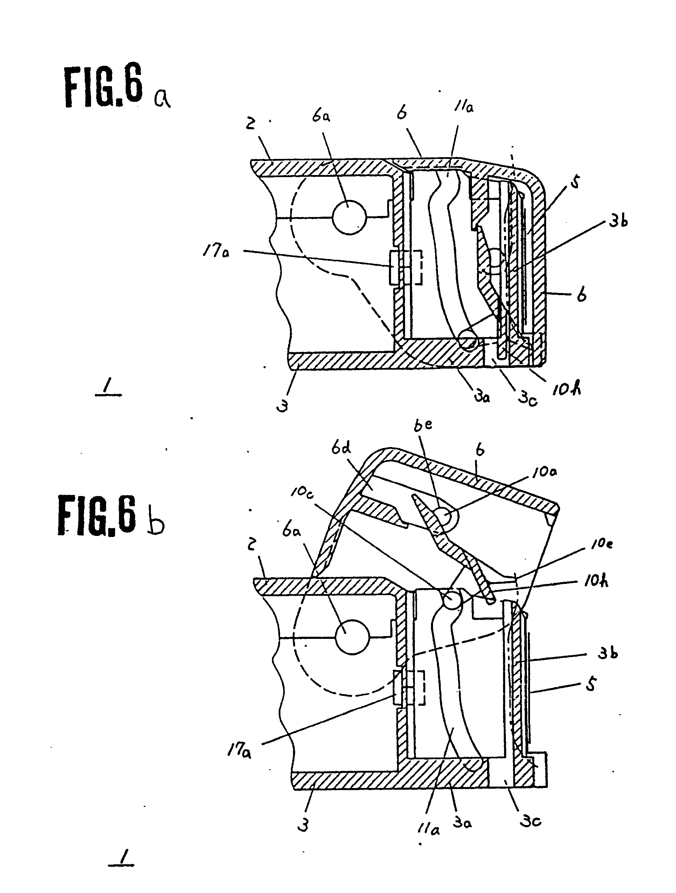

As best shown in Figs.6-a and 6-b, the tape guard 3b is enclosed in a space between the front and inner lids 6 and 10 when they are closed.

A protrudent chip 10h is mounted on the inner lid 10 so that it can move into the first position determining hole 3c when the inner lid 10 is closed and come adjacent to the upper end of the tape guard 3b when the inner lid 10 is opened.

The protrudent chip 10h prevents the forwardly exposed portion of the magnetic tape 5 from unwantedly moving into the behind of the tape guard 3b during the opened state and the opening movement of the front and inner lids 6 and 10.

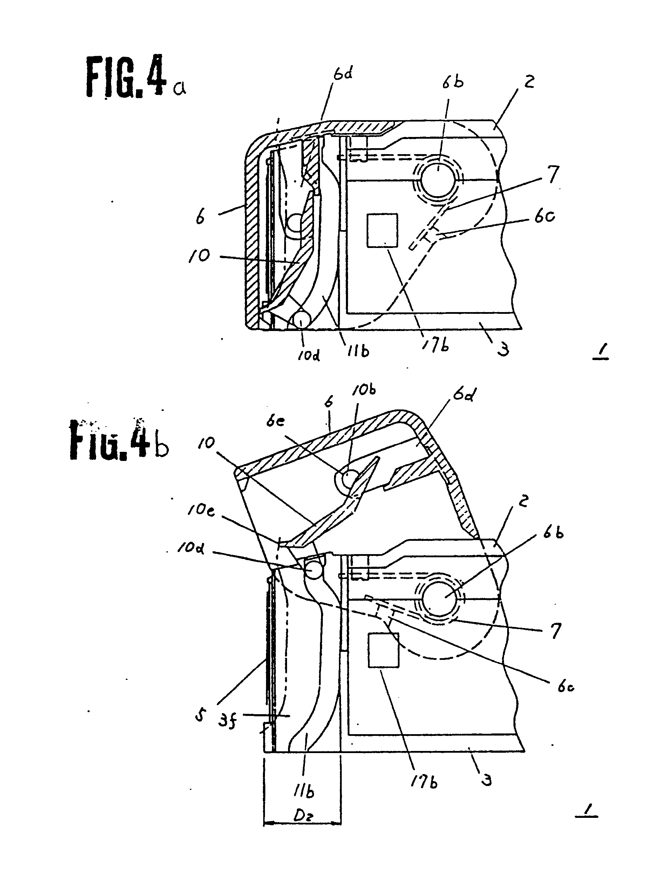

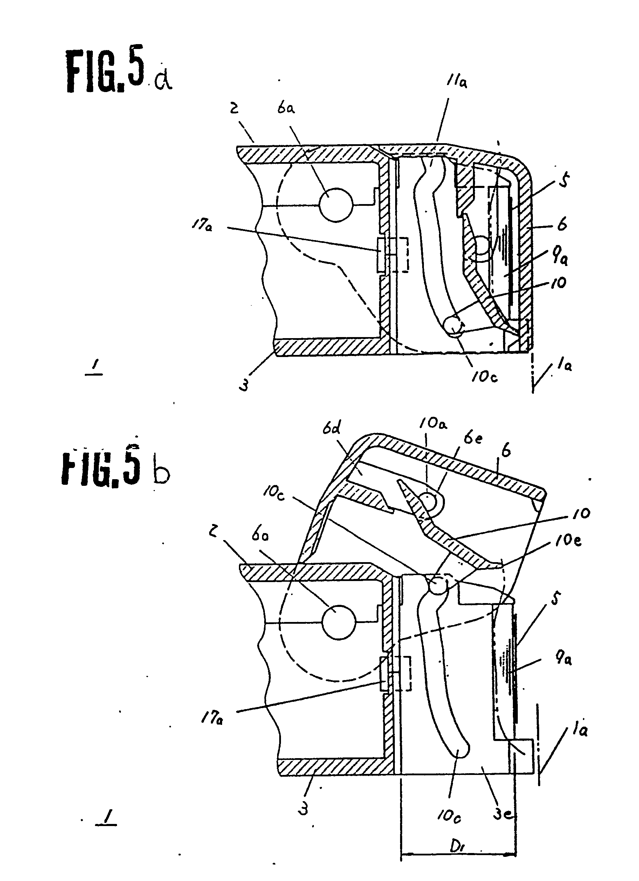

A guiding groove 11a is provided in the left end of the opening 8a of the lower case 3 for guiding a left guide pin 10c mounted on the left end of the inner lid 10. The distance L from the left end of the opening 8a to the guide post 9a is arranged smaller than the thickness T1 of the left-side wall 3e of the lower case 3, which is expressed as $L < T1$. Also, a right guiding groove 11b is provided in the right end of the opening 8b of the lower case 3 for guiding a right guide pin 10d mounted on the right end of the inner lid 10. The relation between the distance L and the thickness T2 of the right-side wall 3f of the lower case 3 is expresses as $L > T2$. The depths D1 and D2 of their respective openings 8a and 8b along the left and right walls 3e and 3f respectively are designated as $D1 > D2$. As shown in Figs.4 and 5, the left and right guiding grooves 11a and 11b are not equally distanced from the front end 1a of the tape cassette 1 and different in the shape.

In particular, the relative arrangement of the left guide pin 10c to the inner lid pivot shaft 10a is not equal to that of the right guide pin 10d to the inner lid pivot shaft 10b for non-symmetrical movement.

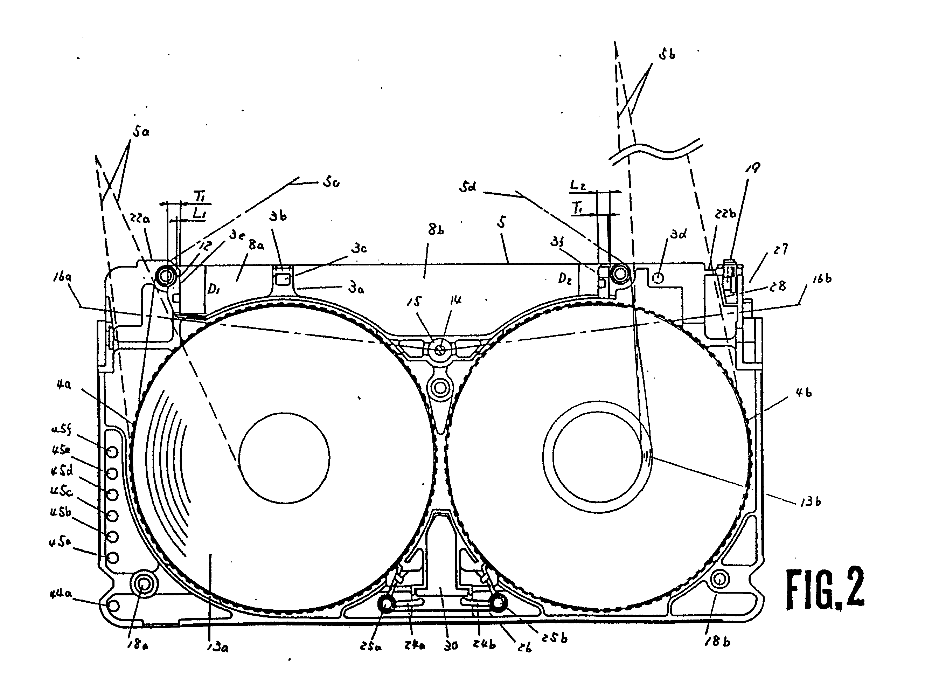

The dotted lines 5a and 5b illustrated in both Figs.1 and 2 define tape path areas through which the magnetic tape 5 can pass as being unwound from both, left and right, tape rolls 13a and 13b. The tape path areas 5a and 5b are determined so as to allow the running tape 5 not to come into direct contact with the guide posts 9a and 9b of the tape cassette 1.

The one-dot chain lines 5c and 5d shown in Fig.2 represent tape paths for high-speed running of the magnetic tape 5 from their respective left and right tape rolls 13a and 13b directly on the guide posts 9a and 9b.

Denoted by 12 is a thin wall portion of the lower case 3 arranged by placing the guide post 9a closer to the opening 8a for the purpose of increasing the left tape path area 5a for common tape passing.

As explained, the tape rolls 13 a and 13b of the magnetic tape 5 are carried on their respective reels 4a and 4b.

A lighthouse 14 is also provided comprising a photodiode which emits light to a photosensor (not shown) for detection of the leading and trailing ends of the magnetic tape 5.

An insertion hole 15 is arranged in the bottom of the lower case 3 for accepting the lighthouse 14 which advances into the tape cassette 1 on loading.

In operation, the light emitted from the lighthouse 14 inserted into the insertion hole 15 is directed along the light paths 16a and 16b from the inside defined by the upper and lower cases 2 and 3 across two light path windows 17a and 17b arranged in the left and right side walls of the upper case 2 or lower case 3 to the outside when the lid 6 is opened.

Also, there are second position determining holes 18a and 18b arranged in the lower case 3.

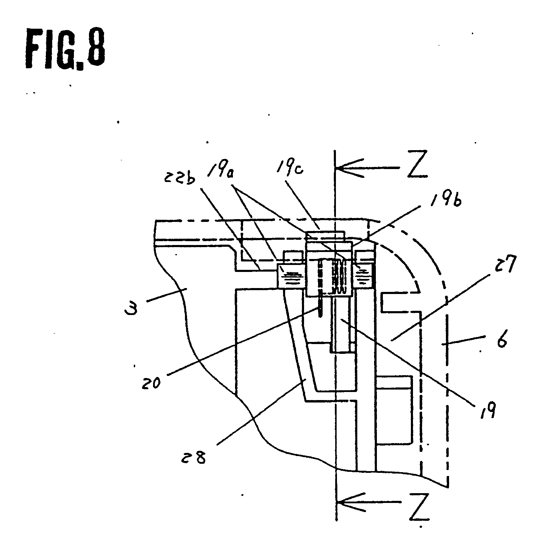

As shown in Figs.8 to 10, a locking member 19 is provided which can engage with a lid locking portion 6f arranged in the forward inner surface of the front lid 6 for locking the front lid 6, when the cassette 1 remains not loaded in a VTR (not shown), thus preventing inadvertent opening of the lid 6 which may cause damage to the magnetic tape 5.

The locking member 19 is yieldingly urged by a front lid locking spring 20 in such a direction (frontward of the cassette) that it remains engaged with the lid locking portion 6f of the front lid 6.

Also, the locking member 19 is supported by the upper and lower cases 2 and 3 for pivotal movement on a pair of pivot shafts 19a. A protrusion 19b arranged on one end of the locking member 19 extends outward from a cutout 23 provided in the front of the upper and lower cases 2 and 3.

When the front lid 6 is closed, the protrusion 19b remains in contact with a contacting side 6g of the locking member 6f preventing the lid 6 from moving in the opening direction denoted by the arrow I.

Two, left and right, prepositioning portions 22a and 22b are arranged on the front side of the lower case 3 for positioning the tape cassette 1 in a cassette holder (not shown) which is used for loading of the cassette 1 into an unshown VTR.

Also, the locking member 19 has a contacting portion 19c thereof arranged beneath the protrusion 19b and extending from a cutout 21 formed in the prepositioning portion 22b and communicated with the cutout 23.

There are provided two reel brakes 24a and 24b for, during no loading into a VTR, preventing inadvertent rotation of the reels 4a and 4b with the magnetic tape 5 which may result in loose tape rewinding. The reel brakes 24a and 24b are arranged for turning about shafts 25a and 25b mounted between the upper and lower cases 2 and 3 and remain urged by a reel braking spring 26 so that their distal ends can engage with the reels 4a and 4b respectively.

Denoted by 27 is a lid opening cutout portion arranged between the upper and lower cases 2 and 3 for accepting a lid opening member (not shown) which is provided in the VTR for opening the front lid 6 in loading.

28 is a partitive wall which is provided for separating the locking member 19 and the front lid locking spring 20 from the two tape rolls 13a and 13b disposed between the upper and lower cases 2 and 3.

29 is a reel brake releasing hole into which a brake releasing pin (not shown) of the VTR is inserted to trigger the disengagement of the reel brakes 24a and 24b from their respective reels 4a and 4b.

30 is a reel brake releasing lever for actuating the reel brakes 24a and 24b to release their respective reels 4a and 4b.

31 is a prepositioning plate provided in the unshown cassette holder for positioning the tape cassette 1 when coming into direct contact with the prepositioning portions 22a and 22b of the lower case 3.

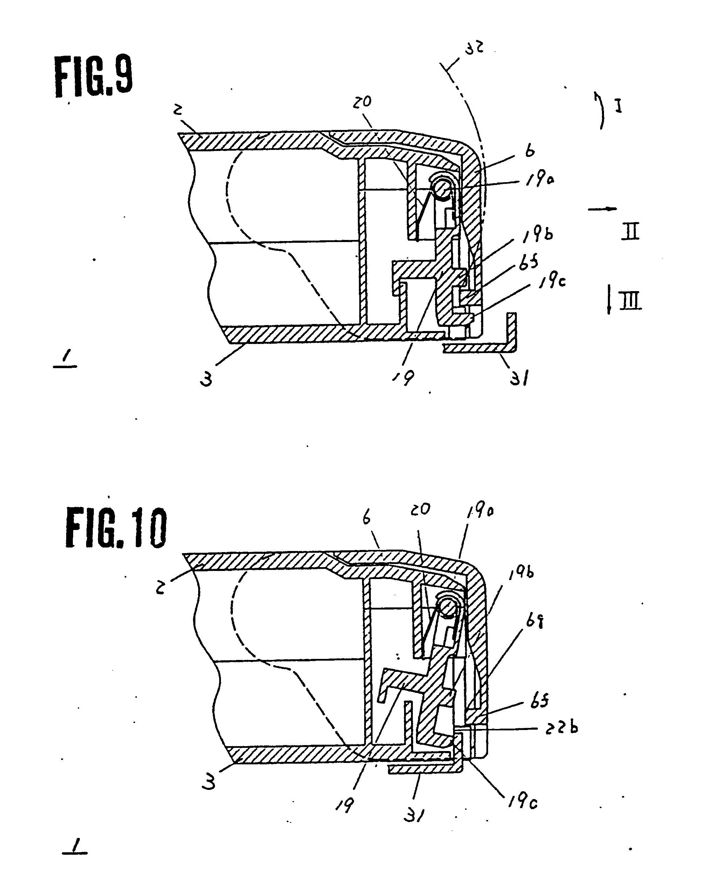

The one-dot chain line 32 shown in Fig.9 represents a moving path of the contacting portion 6g of the front lid 6.

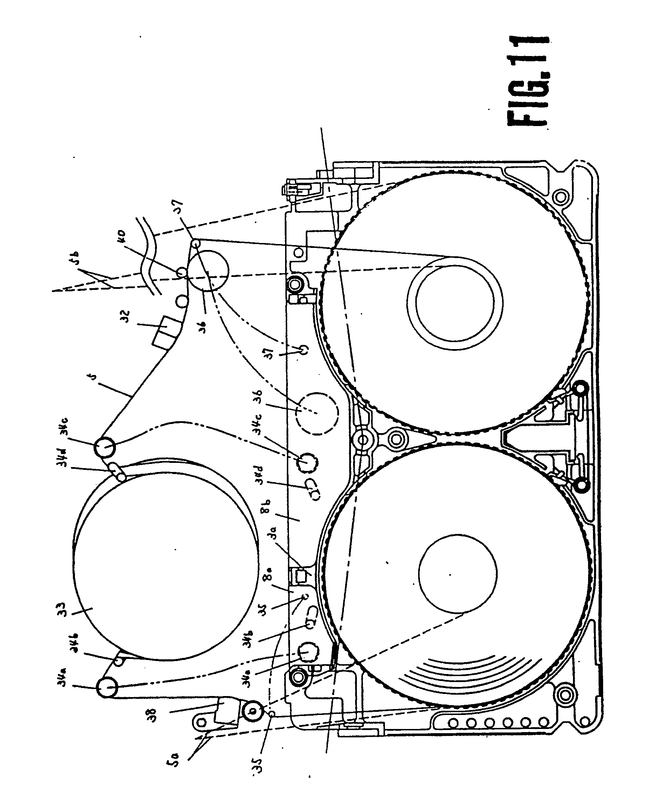

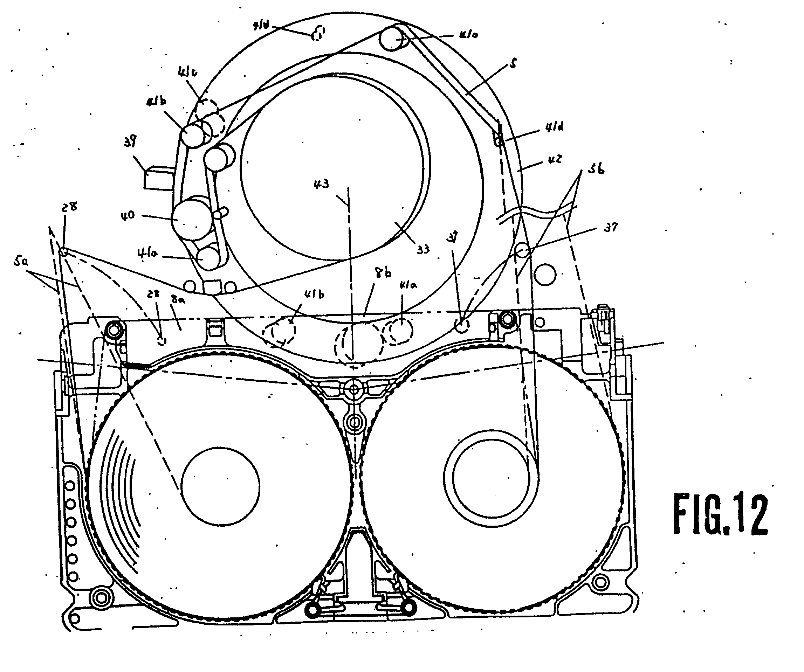

The arrangement in a relevant VTR will now be described referring to Figs.11 and 12.

In an M loading arrangement illustrated in Fig.11, there is provided a cylinder 33 for recording and reproducing of signals.

Two, upright and slant, loading posts 34a and 34b are arranged at the feed-in side for passing the magnetic tape 5 along about the left half of the cylinder 33, both being mounted on one moving plate (not shown).

Also, two loading posts 34c and 34d are arranged at the take-up side for passing the magnetic tape 5 along about the right half of the cylinder 33, both being mounted on one moving plate (not shown).

A tension regulating post 35 is provided for controlling a tension on the running magnetic tape 5.

Also, there are provided a pinch roller 36, a take-up side post 37, a full-erase head 38 for erasing data from the entire width of the magnetic tape 5, and an A/C head 39 for control of rotation phase of the cylinder 33 relative to the running speed of the magnetic tape 5. A capstan 40 is arranged for driving the tape which is pinched between the capstan 40 and the pinch roller 36.

In a U loading arrangement shown in Fig.12, there are loading posts 41a, 41b, 41c, and 41d mounted upwardly on a single loading ring 42.

Denoted by 43 is the center line of the tape cassette 1 which extends across about the center of the cylinder 33.

There is provided an accidental erase protection hole 44 for allowing the VTR to judge whether the writing of data onto the magnetic tape 5 is feasible or not. Also, a row of recognition holes 45a to 45f are provided for allowing the VTR to detect various data, e.g. thickness, length, and material, about the magnetic tape 5 carried in the tape cassette 1.

The operation of the tape cassette 1 having the foregoing arrangement will then be described.

Figs.4a, 5a, and 6a are cross section views showing the lid closing state in which the tensioned portion of the magnetic tape 5 extending across the two openings 8a and 8b is protected between the front lid 6 and the inner lid 10.

As best shown in Figs.8 to 10, the front lid 6 remains locked with the contacting side 6g of its lid locking portion 6f, which can move along an arcuate line 32, held into contact with the protrusion 19b of the locking member 19 thus being prevented from inadvertent movement in the direction of the arrow I.

Accordingly, any damage to the magnetic tape 5 which may be caused by the inadvertent opening of the front lid 6 will be avoided.

When the tape cassette 1 is loaded into the unshown VTR (as moved in the direction denoted by the arrow II of Fig.9), the prepositioning plate 31 of the unshown cassette holder comes into contact with the prepositioning portions 22a and 22b. Simultaneously, the contacting portion 19c of the locking member 19 projecting through the cutout 21 of the prepositioning portion 22b is actuated by the positioning plate 31 to turn clockwise about the pivot shaft 19a and thus, the protrusion 19b disengages from the lid locking portion 6f allowing the front lid 6 to move upward for opening.

As also shown in Figs.1 to 7, the downward movement of the tape cassette 1 in the direction denoted by the arrow III allows the unshown lid opening member of the VTR to move into the lid opening cutout 27 formed by the upper and lower cases 2 and 3. As the tape cassette 1 advances in the arrow III direction, a force is applied for turning the front lid 6 clockwise about the front lid pivot shafts 6a and 6b. As the result of the movement in the arrow III direction, the front lid 6 is opened upward as resisting against the urging force of the front lid spring 7.

Meanwhile, the inner lid 10 is moved about the two, left and right, inner lid pivot shafts 10a and 10b together with the front lid 6 as traveling along the left and right guiding grooves 11a and 11b provided in the lower case 3. Then, the resultant opening state is as illustrated in Figs.4b, 5b, and 6b.

The shape of the left and right guiding grooves 11a and 11b is so arranged that as the inner lid 10 travels to a given distance about the pivot shafts 10a and 10b aligned coaxially, its left and right guide pins 10c and 10d spaced unequally from their respective pivot shafts 10a and 10b are moved along the guiding grooves 11a and 11b. Accordingly, while the inner lid 10 is guided by either the left 11a or right guiding groove 11b, its distal end 11e travels along the definite path denoted by the two-dot chain line of Figs.4 to 6.

More particularly, the inner lid 10 always travels behind the magnetic tape 5 as the front lid 6 is turned upward for opening.

Also, upon the opening of the front and inner lids 6 and 10, the unshown reel brake releasing pin of the VTR moves into the reel brake releasing hole 29 and presses the releasing lever 30 downward. The releasing lever 30 then actuates the reel brakes 24a and 24b to turn backward and release the locking of the two reels 4a and 4b. In the end, the reels 4a and 4b are supported by two reel holders (not shown) respectively arranged in the VTR and will be ready for rotation.

At the same time, the lighthouse 14 of the VTR for detection of the leading and trailing ends of the magnetic tape 5 is advanced into the insertion hole 15 of the tape cassette 1.

During running at a high speed or being drawn out from the tape cassette 1, the magnetic tape 5 comes into contact with the guide posts 9a and 9b. For ensuring no damage to and high speed and high precision running of the magnetic tape 5, the guide posts 9a and 9b are preferably much improved in the resistance to environmental change or deterioration with time, the wear, and the surface roughness.

The operation of the M loading arrangement shown in Fig.11 will now be described.

For loading of the magnetic tape 5 around the cylinder 33, the supply-side loading posts 34a and 34b and the tension post 35 are moved into the opening 8a of the tape cassette 1 and the takeup-side loading posts 34c and 34d and the pinch roller 36 are moved into the opening 8b of symmetrical shape.

When a loading command is given, the magnetic tape 5 is drawn out from the position denoted by the dotted line to the position denoted by the solid line for running across the tape path areas 5a and 5b in common operation. Then, it can run along the cylinder 33, the full erase head 38, and the A/C head 39 as being wrapped around the cylinder at a prescribed length.

As shown, the loading format having a long path between the cylinder 33 and the A/C head 39 allows the cylinder 33 to be located in the left of the tape cassette 1 for compact arrangement of the tape running assembly. More particularly, the arrangement of the posts constituting the tape running assembly is determined not to extend outward from the side ends of the tape cassette 1. For use with such an M loading arrangement, the left opening 8a of the tape cassette 1 can advantageously accept the insertion of the loading posts 34a and 34b and the tension post 35.

The operation of the U loading arrangement will then be described referring to Fig.12.

For loading of the magnetic tape 5 around the cylinder 33, the takeup-side loading posts 41a and 41b, the pinch roller 36, and the takeup-side post 37 are moved into the symmetrical opening 8b of the tape cassette 1 and the tension post 35 is moved into the opening 8a, as denoted by the dotted lines.

When a loading command is given, the counterclockwise rotation of the loading ring 42 carrying the posts 41a, 41b, 41c, and 41d causes the magnetic tape 5 to be wrapped around the cylinder 33 as expressed by the solid line. Simultaneously, the tension post 35 and the takeup-side post 37 are shifted from the position denoted by the dotted line to the position denoted by the solid line.

The U loading arrangement features the plurality of the loading posts 41a, 41b, 41c, and 41d disposed in a circle more or less coaxially of the cylinder 33. More particularly, all the loading posts 41a, 41b, 41c, and 41d are mounted on the single loading ring 42 for the purpose of reducing the number of relevant components and the cost of fabrication which are essential for independent action of each post.

It is understood that outward feeding of the magnetic tape 5 with the loading ring 42 carrying the posts can be carried out smoothly through the laterally symmetrical opening 8b which is more effective in use.

Although the foregoing description refers to the loading of the tape cassette 1 into the cassette loading position of a VTR, unloading will be executed with equal success by carrying out a reverse operation to the loading.

According to the embodiment of the present invention, the movement of the inner lid 10 is restricted by the two, left and right, guiding grooves 11a and 11b while the distal end 10e of the inner lid 10 travels along a given path. However, it is not limited to that arrangement. For example, the left guiding groove 11a may have such a shape that it can control only the opening of the inner lid 10 and the right groove 11b may have such a shape that it can control only the closing of the same, or vice versa.

Also, the thin wall portion 12 may be cut out for allowing the guide post 9a to be displaced closer to the opening 8a.

In the M loading arrangement shown in Fig.11, the opening 8a is arranged on the left of the laterally symmetrical opening 8b for corresponding to the cylinder 33 disposed in the left of the tape cassette 1 while the magnetic tape 5 runs from the reel 4a to the reel 4b. If the magnetic tape 5 runs in a reverse direction, the opening 8a may be arranged on the right of the symmetrical opening 8b.

## Claims

1. A tape cassette comprising:

a tape arranged in roll;

a pair of reels fixedly holding leading and trailing ends of the tape;

a cassette case containing the pair of reels with a forwardly exposed portion of the tape being extended in the front thereof;

an opening provided inside a forwardly exposed portion of the tape;

two, left and right, side walls arranged in the cassette case for defining the opening;

two or more tape guides arranged adjacent to their respective left and right ends of the opening for guiding the forwardly exposed portion of the tape in line;

a front lid pivotably supported by both sides of the cassette case for covering the front of the forwardly exposed portion of the tape when lifted down;

an inner lid pivotably supported by the front lid for covering the back of the tape when lifted down;

guiding grooves arranged in the left and right side walls respectively for controlling a pivotal movement of the inner lid; and

at least one of said tape guides being spaced by a distance L from the opening-side end of its corresponding left or right side wall which has a thickness of T, where L<T is established.

2. A tape cassette according to Claim 1, wherein the thickness T of the side wall where the depth of the opening from the front of the cassette case is greater is less than L.

3. A tape cassette comprising:

a tape arranged in roll;

a pair of reels fixedly holding leading and trailing ends of the tape;

a cassette case containing the pair of reels with a forwardly exposed portion of the tape being extended in the front thereof;

an opening provided inside a forwardly exposed portion of the tape;

a front lid pivotably supported by both sides of the cassette case for covering the front of the forwardly exposed portion of the tape when lifted down;

an inner lid pivotably supported by the front lid for covering the back of the tape when lifted down;

pivot shafts arranged integrally with the inner lid pivotably supported by the front lid;

two, left and right, guiding grooves arranged in the inner surfaces, which face the opening, of two, left and right, side walls of the cassette case respectively for controlling a pivotal movement of the inner lid;

two, left and right, guide projections arranged integrally with the inner lid for movement along the left and right guiding grooves; and

said two pivot shafts being arranged not symmetrical in a relation with their respective guide projections.

4. A tape cassette comprising:

a tape arranged in roll;

a pair of reels fixedly holding leading and trailing ends of the tape;

a cassette case containing the pair of reels with a forwardly exposed portion of the tape being extended in the front thereof;

an opening provided inside the forwardly exposed portion of the tape;

a front lid pivotably supported by both sides of the cassette case for covering the front of the forwardly exposed portion of the tape when lifted down;

an inner lid pivotably supported by the front lid for covering the back of the tape when lifted down;

a first guiding groove arranged in an opening-side surface of a left side wall of the cassette case for controlling a pivotal movement of the inner lid; and

a second guiding groove arranged in an opening-side surface of a right side wall of the cassette case and having a shape not identical to that of the first guiding groove.

5. A tape cassette according to Claim 4, wherein the first and second guiding grooves are unequally spaced from the front end of the cassette case.

6. A tape cassette comprising:

a tape arranged in roll;

a pair of reels fixedly holding leading and trailing ends of the tape;

a cassette case containing the pair of reels with a forwardly exposed portion of the tape being extended in the front thereof;

a first opening of symmetrical shape provided in the cassette case and inside a forwardly exposed portion of the tape;

a second opening provided on either a left or right side of the first opening and inside the forwardly exposed portion of the tape;

a partition arranged between the first and second openings; and

a front lid pivotably supported by two sides of the cassette case for covering the front of the forwardly exposed portion of the tape when lifted down.

7. A tape cassette according to Claim 6, wherein the partition has a stopper plate mounted to the front thereof for restricting a rearward movement of the forwardly exposed portion of the tape.

8. A tape cassette according to Claim 7, wherein at least a portion of the stopper plate is protected with the front and inner lids during the closing state.

9. A tape cassette according to Claim 6, wherein the cassette case comprises an upper cassette case separatably mounted for serving as an approximate upper half and a lower cassette case separatably mounted for serving as an approximate lower half and the partition is formed integrally with the lower cassette case.

10. A tape cassette according to Claim 6, wherein the first opening is located generally in the center of the widthwisely extending cassette case.

11. A tape cassette according to Claim 6, wherein the partition is located on a line which extends at a right angle to a center line between centers of the pair of reels and across the center of the left reel.

12. A tape cassette according to Claim 6, wherein the partition has a positioning hole provided therein for determining a position of the cassette case.

13. A tape cassette comprising:

A tape arranged in roll;

a pair of reels fixedly holding leading and trailing ends of the tape;

a cassette case containing the pair of reels with a forwardly exposed portion of the tape being extended in the front thereof;

a front lid pivotably supported by both sides of the cassette case for covering the front of the forwardly exposed portion of the tape when lifted down;

a positioning contact arranged on the front side of the cassette case for positioning the cassette case as coming into contact with a stopper mounted on a loading means provided for loading the cassette case into a predetermined location of a recording/reproducing apparatus;

a cutout provided in a positioning contact of the cassette case;

a locking member pivotably mounted on the cassette case for rotating motion between a lock position where the front lid is locked in a closing state and an unlock position where the same is unlocked;

an urging means for urging the locking member towards the lock position; and

at least a portion of the locking member being extended outward from the cutout.

14. A tape cassette according to Claim 13, wherein the locking member is located inside of the front side of the cassette case and in addition, a partition is provided for separating the locking member from the tape carried in the cassette case.

FIG.1

FIG.2

FIG.3

EP 0 459 791 A2

FIG.4a

FIG.4b

# FIG.5 a

# FIG.5 b

EP 0 459 791 A2

# FIG.6 a

# FIG.6 b

15

# FIG.7

# FIG.8

# FIG.9

# FIG.10

FIG.11

EP 0 459 791 A2

FIG.12

EP 0 459 791 A2